# EUROPEAN PATENT APPLICATION

(11) **EP 2 866 341 A1**
(43) Date of publication of application: **29.04.2015**
(21) Application number: 13806490.2
(22) Date of filing: 05.06.2013
(51) Int. Cl.: H02M 3/155

(54) **POWER SUPPLY CIRCUIT AND AIR CONDITIONING APPARATUS PROVIDED WITH SAME**

(30) Priority: 20.06.2012 JP 2012138979
(71) Applicant: Sharp Kabushiki Kaisha, Osaka-shi, Osaka 545-8522 (JP)
(72) Inventor: SUGAWARA, Yuri, Osaka-shi, Osaka 545-8522 (JP); KAIJIMA, Yoshitsugu, Osaka-shi, Osaka 545-8522 (JP)
(74) Representative: Treeby, Philip David William
(86) International application number: PCT/JP2013/065560
(87) International publication number: WO 2013/190998

(57) **Abstract**

A power supply circuit includes: a power factor correction circuit (a PFC circuit 130); a bypass circuit (RY1) for bypassing the power factor correction circuit (130); and a control unit (a microcomputer 120) switching, based on a load state, between a first control state in which the power factor correction circuit (130) is operated and the bypass circuit (RY1) is controlled to be in a cut-off state, and a second control state in which the power factor correction circuit (130) is stopped and bypassed by the bypass circuit (RY1). Preferably, the control unit selects the first control state in a case of a first load state, and selects the second control state in a case of a second load state that is lighter in load than the first load state. Accordingly, a power supply circuit improved in efficiency at the time of light load and an air conditioner including the power supply circuit can be provided.

## Description

### TECHNICAL FIELD

The present invention relates to a power supply circuit and an air conditioner including the power supply circuit, and particularly to a power supply circuit including a power factor correction circuit performing interleave control for a plurality of switching elements, and an air conditioner including the power supply circuit.

### BACKGROUND ART

A power factor correction circuit (which will be also referred to as a PFC (Power Factor Correction) circuit) of a switching power supply circuit is configured to include a coil, a transistor (for example, an IGBT (Insulated Gate Bipolar Transistor)) and a diode as main circuit components. A high load type of a switching power supply circuit providing several kW or more of output has posed problems that main circuit components are increased in size due to increased circuit current, and the temperature should be suppressed.

In order to cope with these problems, a switching power supply circuit including a PFC circuit (for example, an interleave control circuit) has been conventionally put in practical use. For the sake of explanation, this interleave control-type PFC circuit will be hereinafter referred to as an interleave PFC circuit (which may also be referred to as a switching power supply circuit).

The interleave PFC circuit includes two sets of main circuit components described above on the precondition that the performance of power factor correction is maintained. This interleave PFC circuit causes these sets of main circuit components to alternately perform a switching operation. By employing the interleave PFC circuit, ripples of an input AC current are reduced while the conduction current of each main circuit component is reduced to half of that in the conventional case. Accordingly, the interleave PFC circuit contributes to size reduction of each main circuit component (for example, a coil).

Japanese Patent Laying-Open No. 2011-229255 (PTD 1) discloses a technique, which relates to a PFC power supply provided with such an interleave PFC circuit, for lowering the switching frequency of the PFC power supply in the light load (which is also referred to as low load) state. Thereby, switching loss at the time of light load is decreased while the switching frequency at the time of heavy load (which is also referred to as high load) is kept high, so that the efficiency at the time of light load is improved without increasing a boosting inductor and an output smoothing capacitance.

### CITATION LIST

### PATENT DOCUMENT

PTD 1: Japanese Patent Laying-Open No. 2011-229255

### SUMMARY OF INVENTION

### TECHNICAL PROBLEM

At the time of light load, the air conditioner entirely consumes less operation power. Accordingly, when the power factor correction operation is carried out, the control circuit efficiency of the air conditioner is declined due to switching loss of the PFC circuit. In order to cope with this problem, there is also an approach for improving the PFC circuit efficiency by stopping the power factor correction operation itself to reduce loss in the switching element.

However, a current continuously flows through a coil and a diode even if the switching operation is not carried out. Accordingly, loss occurs due to the direct current resistance component of the coil and a forward voltage drop in the diode. This inhibits improvement in efficiency at the time of light load.

The present invention aims to provide a power supply circuit improved in efficiency at the time of light load, and an air conditioner including the power supply circuit.

### SOLUTION TO PROBLEM

In summary, the present invention provides a power supply circuit including: a power factor correction circuit; a bypass circuit for bypassing the power factor correction circuit; and a control unit switching, based on a load state, between a first control state in which the power factor correction circuit is operated and the bypass circuit is controlled to be in a cut-off state, and a second control state in which the power factor correction circuit is stopped and bypassed by the bypass circuit.

Preferably, the control unit selects the first control state in a case of a first load state, and selects the second control state in a case of a second load state that is lighter in load than the first load state.

More preferably, the power factor correction circuit includes a plurality of voltage conversion circuits. Each of the plurality of voltage conversion circuits has a coil, a diode and a switching element. In the first control state, the control unit changes the number of voltage conversion circuits to be operated and the number of voltage conversion circuits to be stopped among the plurality of voltage conversion circuits in accordance with the load state.

Further preferably, when at least two of the plurality of voltage conversion circuits are operated, the control unit brings the switching elements of two voltage conversion circuits alternately into conduction.

Preferably, the bypass circuit includes a relay controlled by the control unit to be brought into a conducting state and a non-conducting state.

Preferably, the power supply circuit further includes a rectifier circuit that converts a voltage from AC to DC and supplies the DC voltage to the power factor correction circuit.

According to another aspect, the present invention provides an air conditioner including: the power supply circuit according to any one described above; an inverter receiving electric power from the power supply circuit; and a compressor driven by the inverter.

### ADVANTAGEOUS EFFECTS OF INVENTION

According to the present invention, the power supply circuit and the air conditioner including the same can be improved in efficiency at the time of light load.

### BRIEF DESCRIPTION OF DRAWINGS

Fig. 1 is a block diagram showing the entire configuration of an air conditioner.
Fig. 2 is a diagram for illustrating a study example of a switching power supply unit in Fig. 1.
Fig. 3 is a circuit diagram showing the main configuration of a power supply circuit according to the present embodiment.
Fig. 4 is a circuit diagram showing the main configuration of a modification of the power supply circuit.
Fig. 5 is a flowchart for illustrating control carried out by a microcomputer.
Fig. 6 is a diagram showing the relation between load conditions and operations of a bypass circuit and a PFC circuit.

### DESCRIPTION OF EMBODIMENTS

The present invention will be hereinafter described in detail with reference to the accompanying drawings. In the drawings, the same or corresponding components are designated by the same reference characters, and a description thereof will not be repeated.

### [Configuration of Air Conditioner]

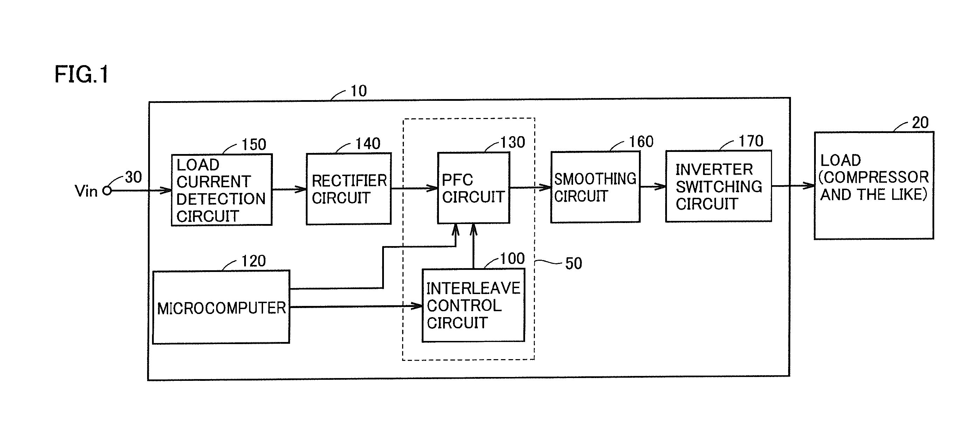

Fig. 1 is a block diagram showing the entire configuration of an air conditioner. Referring to Fig. 1, the air conditioner includes an input terminal 30, a compressor (load device) 20, and a power supply circuit 10 that transmits electric power to compressor 20.

Power supply circuit 10 includes a microcomputer 120, a switching power supply unit 50, a load current detection circuit 150, a rectifier circuit 140, a smoothing circuit 160, and an inverter (switching circuit) 170. In this case, switching power supply unit 50 includes an interleave control circuit 100 and a PFC circuit 130.

Input terminal 30 is supplied with an AC voltage Vin. Rectifier circuit 140 rectifies the AC voltage to a direct-current (DC) voltage. The PFC circuit, which is also referred to as a power factor correction circuit, boosts the output of rectifier circuit 140 and outputs the boosted output to smoothing circuit 160.

Microcomputer 120 includes a microcomputer and a storage device. The microcomputer carries out each process step described in the program. This storage device includes various types of storage devices such as a ROM (Read Only Memory), a RAM (Random Access Memory), a rewritable nonvolatile memory (EPROM (Erasable Programmable ROM) and the like), and a hard disk device, for example.

This storage device stores various pieces of information, data, and the like, stores a program executed by the microcomputer, and also provides a working space for executing the program. It is to be noted that the microcomputer can be regarded as functioning as various means coping with each process step described in the program, or can be regarded as implementing various functions coping with each process step. Furthermore, without limitation to the above, microcomputer 120 may cause hardware to implement a part or all of various steps carried out by microcomputer 120 or of various means or various functions implemented by microcomputer 120. In addition, microcomputer 120 is included in power supply circuit 10 in this case, but not limited to this, another microcomputer may be used to control PFC circuit 130 and interleave control circuit 100.

Microcomputer 120 can control the ON/OFF state of each switching element in PFC circuit 130 in accordance with the load condition, and outputs, to interleave control circuit 100, an instruction to change the number of switching elements in accordance with the load condition.

Based on the output signal from microcomputer 120 to give an instruction to change the number of switching elements, interleave control circuit 100 controls the ON/OFF state of each switching element of PFC circuit 130.

Microcomputer 120 further controls the bypass circuit in PFC circuit 130 described later in accordance with the load condition. When the load condition is light load (low load) that is close to zero, microcomputer 120 causes the bypass circuit to bypass each switching element in the PFC circuit.

It is to be noted that a smoothing circuit 160 is provided between switching power supply unit 50 and inverter 170 for smoothing the DC voltage.

Furthermore, inverter 170 is connected at its output side, for example, to compressor 20. Inverter 170 converts the received DC voltage into an AC voltage, and supplies the converted AC voltage to compressor 20. Thereby, compressor 20 is driven.

Although not shown, load current detection circuit 150 detects the current of compressor 20, and gives feedback of the detected load current to microcomputer 120. Furthermore, rectifier circuit 140 is provided between input terminal 30 and PFC circuit 130 for rectifying the AC voltage.

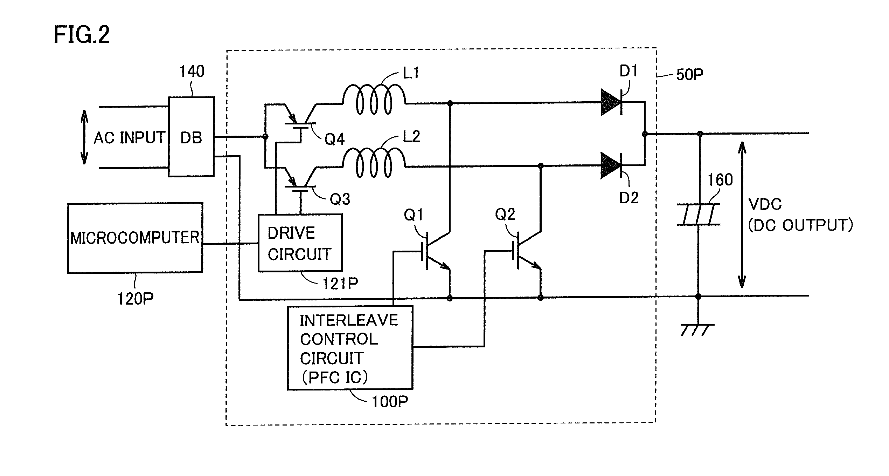

Fig. 2 is a diagram for illustrating a study example of the switching power supply unit in Fig. 1. Referring to Fig. 2, a switching power supply unit 50P of the study example causes a main circuit and a sub-circuit to alternately operate. The main circuit includes a coil L1, a switching element Q1 and a diode D1. The sub-circuit includes a coil L2, a switching element Q2 and a diode D2.

Under normal conditions, microcomputer 120P causes a drive circuit 121P to bring each of switching elements Q3 and Q4 into a conducting state, and causes interleave control circuit 100P to perform an interleave operation for bringing switching elements Q1 and Q2 alternately into conduction.

At the time of light load, microcomputer 120P causes drive circuit 121P to bring each of switching elements Q3 and Q4 into a non-conducting state, and causes interleave control circuit 100P to bring each of switching elements Q1 and Q2 into an OFF state. Consequently, at the time of light load, the DC voltage having been rectified by rectifier circuit (diode bridge) 140 is supplied to a load through coils L1, L2 and diodes D1, D2, so that switching loss is reduced.

However, even if switching elements Q1 and Q2 do not perform a switching operation, a current continuously flows through coils L1, L2 and diodes D1, D2. Accordingly, loss occurs due to a direct current resistance part of the coil and a forward voltage drop in the diode (loss = loss by a direct current resistance part of coil L2 for boosting + loss by a forward voltage drop in the diode for output). This inhibits improvement in efficiency at the time of light load.

Accordingly, in the present embodiment, a bypass circuit for bypassing a coil and a diode at the time of light load is provided.

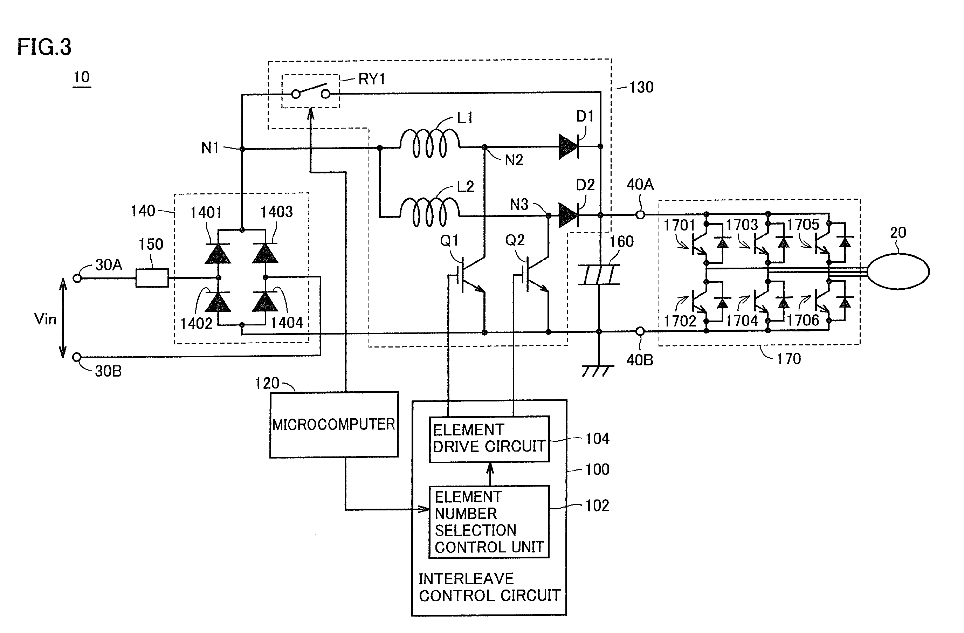

Fig. 3 is a circuit diagram showing the main configuration of a power supply circuit according to the present embodiment. Referring to Fig. 3, power supply circuit 10 includes input terminals 30A and 30B, microcomputer 120, interleave control circuit 100, PFC circuit 130, terminals 40A and 40B, inverter 170, compressor 20, rectifier circuit 140, and load current detection circuit 150.

### (Rectifier Circuit 140, Load Current Detection Circuit 150)

Load current detection circuit 150 detects the current flowing through compressor 20 described later, and gives feedback of the detected current to microcomputer 120, which is not shown. On the other hand, rectifier circuit 140 performs full-wave rectification of AC voltage Vin. Here, rectifier circuit 140 includes diodes 1401 to 1404. Diodes 1401 and 1402 are connected in series each having a forward direction extending from the ground node toward a node N1. Furthermore, diodes 1403 and 1404 are also connected in series each having a forward direction extending from the ground node toward a node N1.

Input terminal 30A is connected to a connection node between diode 1401 and diode 1402 via load current detection circuit 150. In contrast, input terminal 30B is connected to a connection node between diode 1403 and diode 1404.

### (PFC Circuit 130)

PFC circuit 130 includes coils L1, L2, diodes D1, D2, switching elements Q1, Q2, and a relay RY1.

Relay RY1 connects node N1 and terminal 40A in response to a command from microcomputer 120.

Coil L1 is connected between node N1 and node N2. Diode D1 is connected having a forward direction extending from node N2 toward terminal 40A. Coil L2 is connected between node N1 and node N3. Diode D2 is connected having a forward direction extending from node N3 toward terminal 40A.

Switching element Q1 has a collector connected to node N2, an emitter connected to the ground node, and a control electrode controlled by an element drive circuit 104.

Switching element Q2 has a collector connected to node N3, an emitter connected to the ground node, and a control electrode controlled by element drive circuit 104.

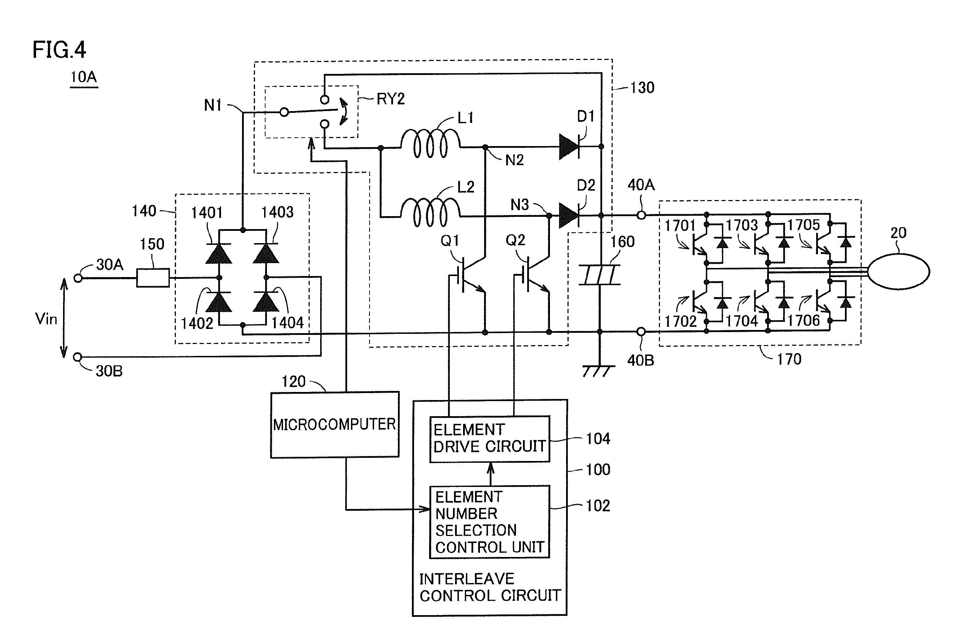

Although Fig. 4 shows an NPN-type bipolar transistor as each of switching elements Q1 and Q2, the switching element is not limited thereto, but another element may be used as long as it serves as a switching element. The switching element may be, for example, an MOS (Metal Oxide Semiconductor) field effect transistor, an IGBT (insulated gate bipolar transistor), a compound semiconductor device using SiC (silicon carbide) or GaN (gallium nitride), and the like.

### (Interleave Control Circuit 100)

Interleave control circuit 100 includes an element number selection control unit 102 and an element drive circuit 104. Element number selection control unit 102 receives an instruction signal for switching a switching element from microcomputer 120, and sets the number of switching elements for satisfying the load condition.

Element drive circuit 104 supplies a drive voltage for driving the set number of switching elements.

### (Smoothing Circuit 160)

Smoothing circuit (smoothing capacitor) 160 is provided between terminals 40A and 40B. Smoothing capacitor 160 smoothes the DC voltage applied from input terminals 30A and 30B through coils L1, L2, diodes D1, D2, and relay RY1.

### (Inverter 170, Compressor 20)

The power supply voltage (DC voltage) of inverter 170 is generated by performing full-wave rectification of AC voltage Vin in rectifier circuit 140 and smoothing this voltage in capacitor 160.

Microcomputer 120 causes switching elements 1701 to 1706 of inverter 170 to undergo switching, to cause a pseudo three-phase alternating current to flow through a compressor coil (not shown) that forms compressor 20, thereby rotating compressor 20.

When the rotation speed of compressor 20 rises, a load current becomes large, which leads to a high load condition. In contrast, when the rotation speed falls, the load current becomes small, which leads to a low load condition.

Microcomputer 120 determines based on the load current whether coils L1, L2 and diodes D1, D2 are bypassed by relay RY1, or power factor correction is carried out by coils L1, L2, diodes D1, D2 and switching elements Q1, Q2.

Fig. 4 is a circuit diagram showing the main configuration of a modification of the power supply circuit. Fig. 4 shows a power supply circuit 10A including a relay RY2, in place of relay RY1, in the configuration of power supply circuit 10 in Fig. 3.

Under control of microcomputer 120, relay RY2 switches between the state where the output (node N1) of rectifier circuit 140 is directly connected to terminal 40A and the state where the output (node N1) of rectifier circuit 140 is connected to coils L1 and L2.

Furthermore, according to the bypass scheme by relay RY1 shown in Fig. 3, the current is actually divided into the direction of bypassing relay RY1 and the direction of (coils L1, L2 and diodes D1, D2) at the time of bypassing, which leads to occurrence of loss corresponding to the amount of the current diverted into the direction of (coils L1, L2 and diodes D1, D2) at the time of bypassing.

In the configuration shown in Fig. 4, since coils L1, L2 and rectifier circuit 140 are separated at the time of bypassing, the loss corresponding to the amount of the current diverted into coils L1 and L2 can be further reduced.

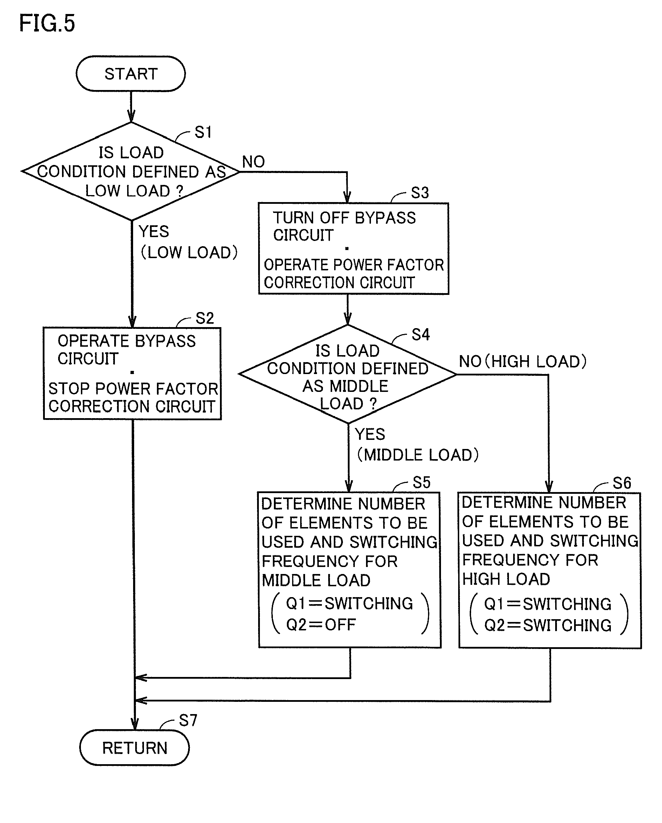

Fig. 5 is a flowchart for illustrating control carried out by the microcomputer. Referring to Figs. 3 and 5, first in step S1, microcomputer 120 determines whether the load condition is low load (light load) or not. Microcomputer 120 determines the load condition based on the load current detected by load current detection circuit 150.

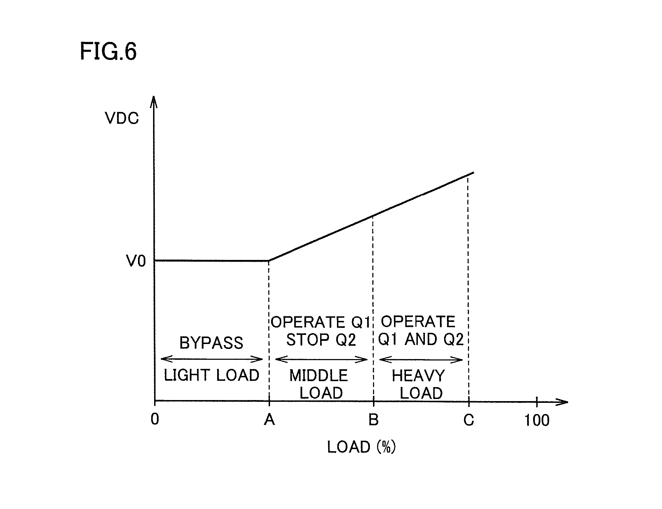

Fig. 6 is a diagram showing the relation between load conditions and operations of the bypass circuit and the PFC circuit. As shown in Fig. 6, microcomputer 120 determines that the load condition is light load (low load) while load is 0% to A%; determines that the load condition is middle load while load is A% to B %; and determines that the load condition is heavy load (high load) while load is B% to C %. It is to be noted that A, B and C indicate determination threshold values, in which 0 < A<B<C.

Again referring to Fig. 5, when it is determined in step S1 that the load condition is low load, microcomputer 120 stops the power factor correction circuit and causes the bypass circuit to operate in step S2. Specifically, relay RY1 is brought into conduction in the configuration in Fig. 3 while relay RY2 is switched such that node N1 is directly connected to terminal 40A in the configuration in Fig. 4. Then, switching elements Q1 and Q2 each are fixed in an OFF state in each of the configurations in Figs. 3 and 4.

By such control, PFC circuit 130 is prevented from carrying out a boosting operation. Accordingly, in the case of light load as shown in Fig. 6, an output voltage VDC output between terminals 40A and 40B turns into a DC voltage V0 obtained by rectifying AC voltage Vin.

When it is determined in step S1 that the load condition is not low load, the process proceeds to step S3. In step S3, the bypass circuit is turned off and the power factor correction circuit is operated. Specifically, relay RY1 is controlled to be in a non-conducting state in the configuration in Fig. 3 while relay RY2 is switched such that node N1 is connected to coils L1 and L2 in the configuration in Fig. 4.

Then, in step S4, microcomputer 120 determines whether the load condition is middle load or not. When the load condition is middle load, the process proceeds to step S5. When the load condition is not middle load (that is, the load condition is heavy load), the process proceeds to step S6.

In step S5 which is applied in the case where the load condition is middle load, microcomputer 120 causes switching element Q1 to operate, and stops switching of switching element Q2, as shown in Fig. 6. It is to be noted that switching element Q2 may be operated while switching element Q1 may be stopped, or switching elements Q1 and Q2 may alternately be operated and stopped.

In step S 6 which is applied in the case where the load condition is heavy load, microcomputers 120 causes each of switching elements Q1 and Q2 to undergo switching, as shown in Fig. 6. It is preferable to shift phases at the time of this switching for reducing ripple noise. Furthermore, by appropriately controlling the switching frequencies and the duty ratios of switching elements Q1 and Q2, an output voltage VDC output between terminals 40A and 40B rises as the load increases from A % to C%, for example, as shown in Fig. 6.

When any one process of steps S 2, S5 and S6 is ended in Fig. 5, the process is once returned to a main routine in step S7, and then, the process is repeatedly carried out again from step S1.

Although the number of switching elements to be used and the frequency of each switching element are determined after determining whether the bypass circuit is operated or not in Fig. 5, the determination order is not limited to that in the example in Fig. 5. For example, step S3 may be carried out after determination in steps S1 and S4.

As described above, in the present embodiment, the interleave-type circuit allowing phase difference to occur in switching of switching elements Q1 and Q2 is provided with relay RY1 or RY2 that switches between conduction into coils L1, L2 and diodes D1, D2, and bypass control of conduction into other circuits. Thus, conduction into the power factor correction circuit is bypassed at the time of light load, thereby allowing further improvement in efficiency at the time of light load.

At the time of light load, a control signal is output from microcomputer 120 to turn on relay RY1, thereby eliminating loss caused by conduction into coils L1, L2 and diodes D1, D2, to allow further improvement in efficiency as compared with the conventional case.

Furthermore, relay RY1 may be a semiconductor element (for example, a p-MOSFET, a p-IGBT, a SiCFET, a GaNFET, and the like). It is desirable that an ON voltage Vce (sat) of each of the p-MOSFET, the SiCFET and the GaNFET/p-IGBT is equal to or lower than the generated voltages of L1(L2) + D1(D2). (In the case of a p-MOS/IGBT that does not satisfy this condition, the steady-state loss caused by the p-MOS/IGBT for bypassing is greater than the loss caused in the coil or the diode of the PFC circuit.)

Lastly, the present embodiment will be summarized again with reference to the accompanying drawings. Referring to Fig. 3, the power supply circuit of the present embodiment includes a power factor correction circuit (PFC circuit 130); a bypass circuit (RY1, RY2) for bypassing power factor correction circuit 130; and a control unit (microcomputer 120) switching, based on the load state, between the first control state in which power factor correction circuit 130 is operated and the bypass circuit (RY1, RY2) is controlled to be in a cut-off state, and the second control state in which power factor correction circuit 130 is stopped and bypassed by the bypass circuit (RY1, RY2).

Preferably, as shown in Figs. 5 and 6, microcomputer 120 selects the first control state in the case of the first load state (middle load, heavy load in Fig. 6), and selects the second control state in the case of the second load state (light load in Fig. 6) that is lighter in load than the first load state.

More preferably, power factor correction circuit 130 includes a plurality of voltage conversion circuits. Each of the plurality of voltage conversion circuits has coils L1, L2, diodes D1, D2 and switching elements Q1, Q2. In other words, coil L1, diode D1 and switching element Q1 form the first conversion circuit (a boosting circuit) while coil L2, diode D2 and switching element Q2 form the second conversion circuit. In the first control state, microcomputer 120 changes the number of voltage conversion circuits to be operated and the number of voltage conversion circuits to be stopped among the plurality of voltage conversion circuits in accordance with the load state. In other words, microcomputer 120 changes the number of elements to be switched depending on middle load and heavy load in Fig. 6.

Further preferably, when at least two of the plurality of voltage conversion circuits are operated, microcomputer 120 brings switching elements Q1 and Q2 respectively included in two voltage conversion circuits alternately into conduction. In other words, microcomputer 120 causes interleave control circuit 100 to perform interleave control at the time of switching of two switching elements Q1 and Q2.

Preferably, the bypass circuit includes relay RY1 that is controlled by microcomputer 120 to be in a conducting state and a non-conducting state.

Preferably, the power supply circuit further includes rectifier circuit 140 that converts AC voltage Vin into a DC voltage and supplies the converted DC voltage to power factor correction circuit 130.

According to another aspect, the present invention provides an air conditioner including the power supply circuit according to any one described above, inverter 170 receiving electric power from the power supply circuit, and compressor 20 driven by inverter 170.

It should be understood that the embodiments disclosed herein are illustrative and non-restrictive in every respect. The scope of the present invention is defined by the terms of the claims, rather than the description above, and is intended to include any modifications within the meaning and scope equivalent to the terms of the claims.

### REFERENCE SIGNS LIST

10, 10A power supply circuit, 20 compressor, 30, 30A, 30B input terminal, 40A, 40B terminal, 50, 50P switching power supply unit, 100, 100P interleave control circuit, 102 element number selection control unit, 104 element drive circuit, 120, 120P microcomputer, 121P drive circuit, 130 PFC circuit, 140 rectifier circuit, 150 load current detection circuit, 160 smoothing circuit, 170 inverter, 1401 to 1404, D1, D2 diode, 1701 to 1706, Q1 to Q4 switching element, L1, L2 coil, RY1 relay.

## Claims

1. A power supply circuit comprising:
a power factor correction circuit;
a bypass circuit for bypassing said power factor correction circuit; and
a control unit switching, based on a load state, between a first control state in which said power factor correction circuit is operated and said bypass circuit is controlled to be in a cut-off state, and a second control state in which said power factor correction circuit is stopped and bypassed by said bypass circuit.

2. The power supply circuit according to claim 1, wherein said control unit selects said first control state in a case of a first load state, and selects said second control state in a case of a second load state that is lighter in load than said first load state.

3. The power supply circuit according to claim 2, wherein
said power factor correction circuit includes a plurality of voltage conversion circuits,
each of said plurality of voltage conversion circuits has a coil, a diode and a switching element, and
in said first control state, said control unit changes the number of voltage conversion circuits to be operated and the number of voltage conversion circuits to be stopped among said plurality of voltage conversion circuits in accordance with said load state.

4. The power supply circuit according to claim 3, wherein when at least two of said plurality of voltage conversion circuits are operated, said control unit brings the switching elements of two voltage conversion circuits alternately into conduction.

5. The power supply circuit according to claim 1, wherein said bypass circuit includes a relay controlled by said control unit to be brought into a conducting state and a non-conducting state.

6. The power supply circuit according to claim 1, further comprising a rectifier circuit that converts a voltage from AC to DC and supplies the DC voltage to said power factor correction circuit.

7. An air conditioner comprising:
the power supply circuit according to claim 1;
an inverter receiving electric power from said power supply circuit; and
a compressor driven by said inverter.
